# EUROPÄISCHE PATENTSCHRIFT

(11) **EP 3 296 239 B1**
(45) Veröffentlichungstag und Bekanntmachung des Hinweises auf die Patenterteilung: **01.02.2023**
(21) Anmeldenummer: 17189536.0
(22) Anmeldetag: 06.09.2017
(51) Int. Cl.: B65G 47/91

(54) **GREIFERANORDNUNG ZUM ERFASSEN VON TEIGSTÜCKEN ODER BACKWAREN**
GRIPPER ASSEMBLY FOR DETECTING DOUGH PIECES OR BAKED PRODUCTS
DISPOSITIF PRÉHENSEUR PERMETTANT DE SAISIR DES PÂTONS OU DES PRODUITS DE BOULANGERIE

(30) Priorität: 20.09.2016 DE 102016117706; 05.09.2017 DE 102017120409
(43) Veröffentlichungstag der Anmeldung: 21.03.2018
(73) Patentinhaber: Kasprich, Hans-Jürgen, 30916 Isernhagen (DE)
(72) Erfinder: Kasprich, Hans-Jürgen, 30916 Isernhagen (DE); Renz, Viktor, 30655 Hannover (DE)
(74) Vertreter: Klein, Thomas

(56) Entgegenhaltungen:
- WO-A1-95/11744
- WO-A1-2010/110719
- DE-A1-102013 009 344
- DE-B- 1 276 310
- DE-U1- 20 212 927
- US-A1- 2013 082 475

## Beschreibung

Die Erfindung bezieht sich auf eine Greiferanordnung zum Erfassen von Teigstücken oder Backwaren von einer Aufnahmeunterlage sowie Ablegen der Teigstücke oder Backwaren auf einer Ablageunterlage in einem Arbeitstakt, wobei ein Greifer eine Greiferkammer mit einer nach unten gerichteten Greiferöffnung aufweist, die von einem luftdurchlässigen Gewebe verschlossen ist, wobei ein Luftanschluß in den Bodenbereich der Greiferkammer mündet, über den die Greiferkammer mit einer Unterdruckquelle verbunden ist und im Arbeitstakt mit Unterdruck beaufschlagbar ist.

Eine derartige bekannte Greiferanordnung zum Erfassen von Teigstücken besitzt ein Paar annähernd senkrecht nach unten gerichteter Greiferarme, die an ihren oberen Enden zueinander und voneinander weg schwenkbar gelagert sind und mit ihren unteren Enden zwischen einer größer voneinander beabstandeten Freigabelage und einer geringer voneinander beabstandeten Greiflage bewegbar antreibbar sind. Zusätzlich ist mittig ein vertikal bewegbar antreibbarer Ausstoßer angeordnet, der sich in der Greiflage in angehobener Position und in der Freigabelage in abgesenkter Ausstoßposition befindet.

Diese Greiferanordnung weist einen aufwendigen Aufbau mit einer Mehrzahl bewegbarer Elemente auf und ist daher auch defektanfällig. Darüber hinaus benötigt der Greif- und Freigabevorgang eine erhebliche Mindestzeit, die nicht unterschritten werden kann. Weiterhin können die Greiferarme beim Erfassen der Teigstücke die Teigstücke beschädigen und/oder erzeugen Abdrücke auf den Teigstücken, die dann auch auf den aus den Teigstücken fertig bearbeiteten Produkten bestehen bleiben.

Aus der US 2013/082475 A1 ist eine Vakuumsaugvorrichtung bekannt, die in der Lage ist ein Werkstück durch Ansaugen mit Hilfe von unter Unterdruck stehender Luft anzuziehen. Die Vakuumsaugvorrichtung weist einen ebenen, luftdurchlässigen Saugplattenkörper auf, der eine unterdruckbeaufschlagbare Saugkammer verschließt und mit seiner der Saugkammer abgewandten Seite ein plattenförmiges Werkstück erfassen kann. Dazu setzt die Vakuumsaugvorrichtung mit einem an dem umlaufenden Rand des Saugplattenkörpers angeordneten Dichtring auf dem zu erfassenden plattenförmigen Werkstück auf und erfaßt bei Unterdruckbeaufschlagung der Saugkammer dieses.

Aus der DE 20 212 927 U1 sowie der DE 1 276 310 B sind Greifvorrichtungen der eingangs genannten Art bekannt, durch die plattenförmige Werkstücke wie z.B. Glasplatten erfaßbar sind. Die Greiferöffnung ist mit einem Schutzüberzug versehen, der Luftdurchlaßöffnungen aufweist und Beschädigungen an der Oberfläche der plattenförmigen Werkstücke vermeiden soll. Die Greifvorrichtung weist zumindest an der Greiferöffnung eine radial umlaufende elastische Dichtung auf, mit der die Greifvorrichtung auf dem plattenförmigen Werkstück aufsetzt und dieses durch Unterdruckbeaufschlagung der Greiferkammer erfaßt.

US 2013/082475 A1, DE 202 12 927 U1 und DE 12 76 310 B offenbaren eine Greiferanordnung gemäß dem Oberbegriff des Anspruchs 1.

Aus der DE 10 2013 009 344 A1 ist ein Sauggreifer der eingangs genannten Art bekannt, wobei anstatt eines Gewebes eine in die Greiferkammer hineingewölbte starre Ansaugwand vorhanden ist.

Aufgabe der Erfindung ist es daher eine Greiferanordnung zum Erfassen von Teigstücken oder Backwaren der eingangs genannten Art zu schaffen, die einfach aufgebaut ist und eine geringere Defektanfälligkeit aufweist, geringe Taktzeiten des Arbeitstakts ermöglicht sowie Beschädigungen oder Abdrücke auf den Teigstücken oder den Backwaren zumindest weitgehend vermeidet und ein Lösen des Teigstücks von dem Gewebe unterstützt.

Diese Aufgabe wird erfindungsgemäß dadurch gelöst, daß das Gewebe ein elastisches Gewebe ist, das sich nach Erfassen des Teigstücks oder der Backware aufgrund des Unterdrucks teilweise in die Greiferkammer hineinwölbt.

Zum Ergreifen der Teigstücke oder Backwaren befindet sich das luftdurchlässige Gewebe in leichter Auflage auf dem Teigstück und die Greiferkammer wird von der Unterdruckquelle mit einem Unterdruck beaufschlagt. Dadurch wird das luftdurchlässige Gewebe zumindest weitgehend durch das Teigstück oder Backwaren abgedeckt und aufgrund der Luftdurchlässigkeit des Gewebes das Teigstück von dem Greifer erfaßt.

Durch das elastische Gewebe wölbt es sich nach Erfassen des Teigstücks oder der Backware aufgrund des Unterdrucks teilweise in die Greiferkammer hinein und zieht dadurch auch das Teigstück oder die Backware etwas in die Greiferkammer hinein. Dadurch wird die Anlagefläche des luftdurchlässigen Gewebes und damit die Haltekraft des Greifers erhöht und das Teigstück oder die Backware bei ausreichend großem Hineinziehen in die Greiferkammer von der Aufnahmeunterlage abgehoben.

Durch die Wölbung des Gewebes ergibt sich eine vergrößerte Auflagefläche des Gewebes auf dem Teigstück, so daß zum Ergreifen und Halten des Teigstücks ein geringerer Saugdruck erforderlich ist. Die führt weiterhin dazu, daß optisch unschöne Abdrücke an den Teigstücken vermieden werden.

Das gewölbte Gewebe hat eine Elastizität, daß es sich beim Erfassen des Teigstücks um ein geringes Maß weiter in die Greifkammer hineinwölbt, um dann beim Ablegen des Teigstücks sich elastisch zurückbewegt und dabei ein Lösen des Teigstücks von dem Gewebe unterstützt.

Wird die Unterdruckbeaufschlagung der Greiferkammer beendet und die Greiferkammer passiv oder aktiv belüftet, fällt das Teigstück oder die Backware ab auf die Ablageunterlage.

Durch diese Ausbildung sind zum Erfassen der Teigstücke oder Backwaren keine Bauteile bewegbar antreibbar, so daß der Greif- und Freigabevorgang nur geringe Zeit erfordert. Dies ermöglicht auch eine Erhöhung des Arbeitstakts und damit der Anzahl der verarbeitbaren Teigstücke oder Backwaren pro Zeiteinheit.

Weiterhin wird aufgrund von nichtbewegbar antreibbaren Bauteilen für den Greif- und Freigabevorgang die Defektanfälligkeit wesentlich reduziert.

Da die Teigstücke oder Backwaren über ihre ganze Anlagefläche an dem luftdurchlässigen Gewebe in Anlage sind, erfolgt bei deren Erfassung weder eine Beschädigung noch kommt es zumindest weitgehend nicht zu optisch unschönen Abdrücken an den Teigstücken oder Backwaren.

Die Aufnahmeunterlage und/oder die Ablageunterlage können Förderbänder sein.

Backwaren sind Teigstücke, die bereits den Backprozeß durchlaufen haben. Es sind z.B. Brötchen, Donuts, Brote, Berliner, Quarkbällchen, Fettgebäck oder Spritzgebäck.

Das luftdurchlässige Gewebe kann jedes dazu geeignete Gewebe, insbesondere ein Filzgewebe oder ein Gazegewebe oder ein Baumwollgewebe oder ein Leinengewebe sein.

Das luftdurchlässige Gewebe kann auch ein teigabweisendes Gewebe wie z. B. ein Polyestergewebe sein, so daß die Luftdurchlässigkeit des Gewebes zumindest weitgehend beibehalten wird und nicht durch an dem Gewebe haftenbleibende Teigteilchen reduziert wird.

Es versteht sich dabei, daß das luftdurchlässige Gewebe ein nahrungsmittelgeeignetes Gewebe ist.

Um das Gewebe bei Verschleiß austauschen zu können oder zum Reinigen von der Greiferkammer abnehmen zu können, kann das Gewebe an einem Gewebeelement angeordnet ist, das lösbar an der Greiferöffnung befestigbar sein.

Eine einfach Montierbarkeit und Demontierbarkeit des Gewebeelements ist dadurch möglich, daß das Gewebeelement mittels einer Rastanordnung oder Verschraubung lösbar an der Greiferöffnung befestigbar ist.

Dazu kann in einfacher und leicht betätigbarer Weise das Gewebeelement einen radial umlaufenden Rastwulst aufweisen, der in eine umlaufende Rastnut im Bereich der Greiferöffnung an der Innenwand der Greiferkammer elastisch einrastbar ist.

Die Greiferkammer weist vorzugsweise einen Querschnitt entsprechend der Form der zu verarbeitenden Teigstücke oder Backwaren auf. Dies kann eine quadratischer, eine rechteckiger, ein ovaler oder ein runder Querschnitt sein. Dabei besitzt die Greiferöffnung eine entsprechende Form.

Weist die Greiferkammer eine kalottenartige Innenwand auf, verringert sich der Querschnitt der Greiferkammer mit zunehmendem Abstand zur Greiferöffnung. Damit kann das Volumen der Greiferkammer reduziert werden, was zu einem schnelleren Evakuieren der Greiferkammer beim Erfassen der Teigstücke führt, wodurch auch der Arbeitstakt der Greiferanordnung erhöht werden kann.

Die Sicherheit gegen optisch unschöne Abdrücke an den Teigstücken oder Backwaren wird noch erhöht, wenn der umlaufende Rand der Greiferöffnung der Greiferkammer eine radial nach außen gerichtete Wölbung aufweist.

Dadurch kann die Greiferöffnung auch keinen Abdruck auf den Teigstücken oder Backwaren hinterlassen.

Die Greiferkammer kann vor Ergreifen des Teigstücks mit einem Druckluftimpuls beaufschlagbar sein. Dadurch wird auf dem Teigstück befindliches Mehl zumindest weitgehend von dem Teigstück abgeblasen, so daß das Teigstück anschließend mit größerer Sicherheit von dem Greifer erfaßt wird.

Ist die Greiferkammer zum Ablegen der Teigstücke oder Backwaren mit einem Druckluftimpuls beaufschlagbar, so erfolgt ein schnelles Belüften der Greiferkammer und ein im Arbeitstakt zeitlich genau definiertes Ablegen der Teigstücke oder Backwaren mit hoher Positionsgenauigkeit auf der Ablageunterlage.

Darüber hinaus erfolgt durch den Druckluftimpuls nach jedem Arbeitstakt auch ein Reinigungsblasen durch das lustdurchlässige Gewebe hindurch.

Zu einem besonders einfachen Aufbau führt es, wenn die Unterdruckquelle aus ein oder mehreren Ejektoren gebildet ist und jeder Ejektor einen Druckluftanschluß aufweist, der in gerader Strömungsrichtung über eine Düse zu einer Mischkammer und von der Mischkammer zu einem Auslaß führt und quer zur Strömungsrichtung vom Druckanschluß zum Auslaß ein Sauganschluß in die Mischkammer mündet, wobei die Sauganschlüsse mit dem Luftanschluß der Greiferkammer verbunden sind.

Weist die Greiferanordnung mehrere gleichzeitig zu betätigende Greifer auf, so können in bauteile- und bauraumsparender Weise die Luftanschlüsse mehrerer Greifer mit den Sauganschlüssen einer oder mehrerer Unterdruckquellen verbunden sein.

Ist der Greifer zwischen einer Aufnahmeposition und einer davon entfernten Ablageposition im Arbeitstakt bewegbar antreibbar, wobei in der Aufnahmeposition ein Erfassen der Teigstücke oder Backwaren von der Aufnahmeunterlage und in der Ablageposition ein Ablegen der Teigstücke oder Backwaren auf die Ablageunterlage erfolgt, so können Aufnahmeunterlage und Ablageunterlage an unterschiedlichen Stellen angeordnet sein.

Um die Teigstücke oder Backwaren erhöht von der Aufnahmeunterlage abheben zu können, kann der Greifer zu einem Erfassen des Teigstücks oder der Backware zur Aufnahmeunterlage absenkbar und nach einem Erfassen des Teigstücks oder der Backware von der Aufnahmeunterlage im Arbeitstakt von der Aufnahmeunterlage sich anhebbar antreibbar sein.

Desgleichen kann der Greifer zu einem Ablegen des Teigstücks oder der-Backware auf der Ablageunterlage im Arbeitstakt absenkbar und nach der Ablage des Teigstücks oder der Backware anhebbar antreibbar sein.

Ausführungsbeispiele der Erfindung sind in der Zeichnung dargestellt und werden im Folgenden näher beschrieben. Es zeigen
- Figur 1: ein erstes Ausführungsbeispiel eines Greifers im Querschnitt
- Figur 2: eine schematische Darstellung eines zweiten Ausführungsbeispiels einer Greiferanordung mit einem Greifer nach Figur 1
- Figur 3: eine schematische Darstellung eines dritten Ausführungsbeispiels einer Greiferanordung mit einem Greifer nach Figur 1
- Figur 4: eine schematische Darstellung eines vierten Ausführungsbeispiels einer Greiferanordung mit einem Greifer nach Figur 1
- Figur 5: eine schematische Darstellung eines fünften Ausführungsbeispiels einer Greiferanordung mit einem Greifer nach Figur 1
- Figur 6: eine schematische Darstellung eines sechsten Ausführungsbeispiels einer Greiferanordung mit einem Greifer nach Figur 1
- Figur 7: ein siebtes Ausführungsbeispiel eines Greifers ohne Gewebe im Querschnitt
- Figur 8: ein achtes Ausführungsbeispiel eines Greifers ohne Gewebe im Querschnitt
- Figur 9: der Greifer nach Figur 8 mit einem Gewebeelement im Querschnitt
- Figur 10: das Gewebeelement des Greifers nach Figur 9 im Querschnitt
- Figur 11: ein neuntes Ausführungsbeispiel eines Greifers im Querschnitt
- Figur 12: ein zehntes Ausführungsbeispiel eines Greifers im Querschnitt.

Die in den Figuren dargestellten Greifer 1 weisen eine Greiferkammer 2 mit einer kalottenartigen Innenwand 3 auf. Die Greiferöffnung 4 der Greiferkammer 2 besitzt eine radial nach außen gerichtete Wölbung 5 und ist von einem luftdurchlässigen Gewebe 6 verschlossen.

Das luftdurchlässige Gewebe 6 ist etwas elastisch und nahrungsmittelgeeignet.

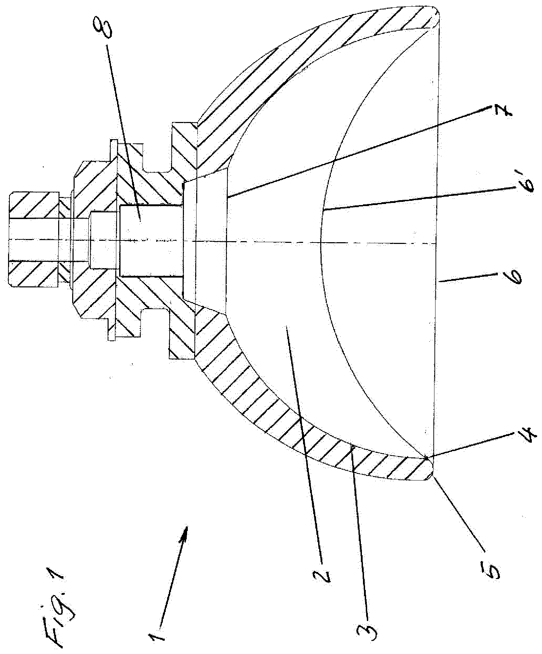

Am Boden 7 der Greiferkammer 2 mündet ein Luftanschluß 8 in die Greiferkammer 2, über den von einer in Figur 1 nicht dargestellten Unterdruckquelle die Greiferkammer 2 in einem Arbeitstakt mit einem Unterdruck beaufschlagbar und anschließend belüftbar ist.

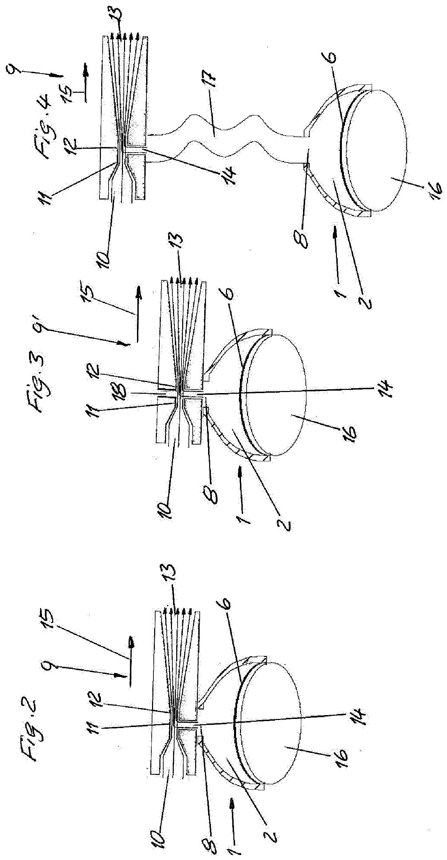

In den Figuren 2 bis 6 sind als Unterdruckquellen Ejektoren 9, 9' dargestellt, die einen Druckluftanschluß 10 aufweisen, über den in dem Arbeitstakt Druckluft dem Ejektor 9, 9' zugeführt wird.

Von dem Druckluftanschluß 10 strömt die Druckluft in gerader Linie durch eine Düse 11 in eine Mischkammer 12 und weiter zu einem Auslaß 13 und ins Freie. Dabei entsteht in der Mischkammer 12 ein Unterdruck, der über einen quer zur Strömungsrichtung der Druckluft 15 von der Mischkammer 12 zur Greiferkammer 2 führenden Sauganschluß 14 die Greiferkammer 2 beaufschlagt.

Liegt dabei das luftdurchlässige Gewebe 6 über einem Teigstück 16, so wird das Teigstück 16 vom Unterdruck in der Greiferkammer 2 an das luftdurchlässige Gewebe 6 herangezogen und somit von dem Greifer 1 erfaßt. Da dabei das Gewebe 6 zumindest weitgehend von dem Teigstück 16 abgedeckt wird, verliert es auch seine Luftdurchlässigkeit und wird zusammen mit dem Teigstück 16 teilweise in die Greiferkammer 2 hineingezogen.

Das sich dabei kugelkappenartig verformende Gewebe 6' ist in Figur 1 dargestellt.

Der Ejektor 9, 9' kann dabei unmittelbar neben dem Greifer 1 (Figuren 2, 3, 5 und 6) oder über eine als Schlauch oder Rohr ausgebildete Unterdruckleitung 17 auch in einem Abstand zum Greifer 1 angeordnet sein.

Am Ende des Arbeitstaktes wird zum Ablegen des Teigstücks 16 die Druckluftzufuhr zum Druckluftanschluß 10 beendet, so daß sich der Unterdruck in der Greiferkammer 2 abbaut und das Teigstück 16 von dem Gewebe 6, 6' abfällt.

In Figur 3 mündet weiterhin ein Druckluftimpulsanschluß 18 quer zur Strömungsrichtung 15 in die Mischkammer 12.

Soll das Teigstück 16 abgelegt werden, erfolgt außer der Beendung der Druckluftzufuhr zur Greiferkammer 2 nicht nur ein Abbau des Unterdrucks sondern es wird über den Druckluftimpulsanschluß 18 ein Impuls an

Druckluft über die Mischkammer 12 in die Greiferkammer 2 eingeblasen, so daß dort schnell ein Überdruck aufgebaut wird.

Dieser Überdruck in der Greiferkammer 2 läßt das Teigstück 16 schnell von dem Gewebe 6' abfallen und Durchbläst dabei das Gewebe 6`, so daß dieses gleichzeitig gereinigt wird.

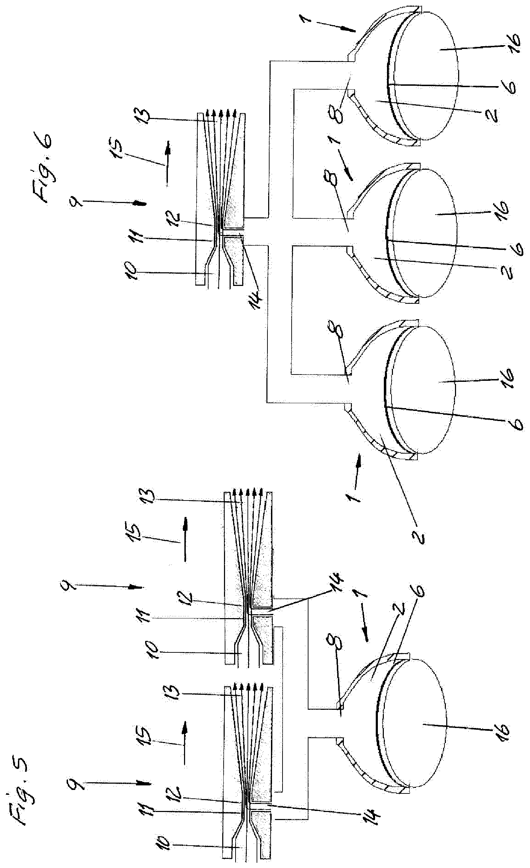

Figur 5 zeigt, daß der Sauganschluß 14 von zwei Ejektoren 9 zusammengefaßt ist und in die Greiferkammer 2 eines Greifers 1 führt. Dadurch kann eine größere Haltekraft und unterschiedlich einstellbare Volumenströme erzeugt sowie ein schnelleres unter Unterdrucksetzen der Greiferkammer 2 erfolgen.

Figur 6 zeigt wiederum einen Sauganschluß 14 eines Ejektors 9, der auf drei Stränge aufgeteilt ist, wobei jeder Strang einer Greiferkammern 2 von drei Greifern zugeführt ist.

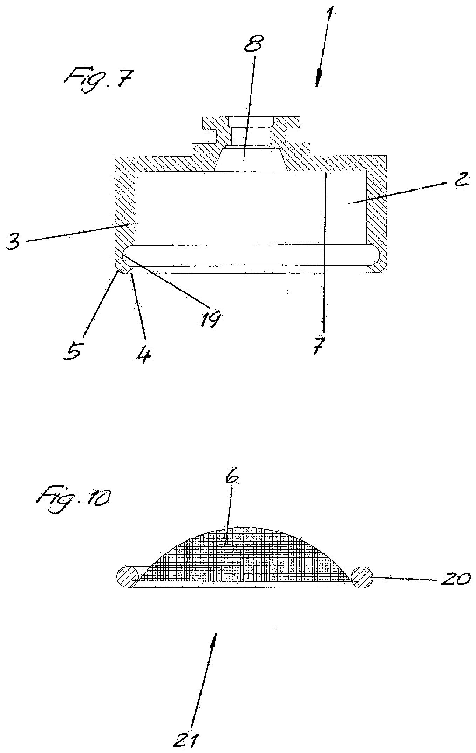

Die Ausführungsbeispiele der Figuren 7 bis 12 entsprechen weitgehend dem Ausführungsbeispiel der Figur 1.

Figur 7 zeigt ohne Gewebe einen Greifer 1 mit einer Greiferkammer 2 quadratischen Querschnitts, der im Bereich der Greiferöffnung 4 an der Innenwand 3 der Greiferkammer 2 eine umlaufende Rastnut 19 aufweist.

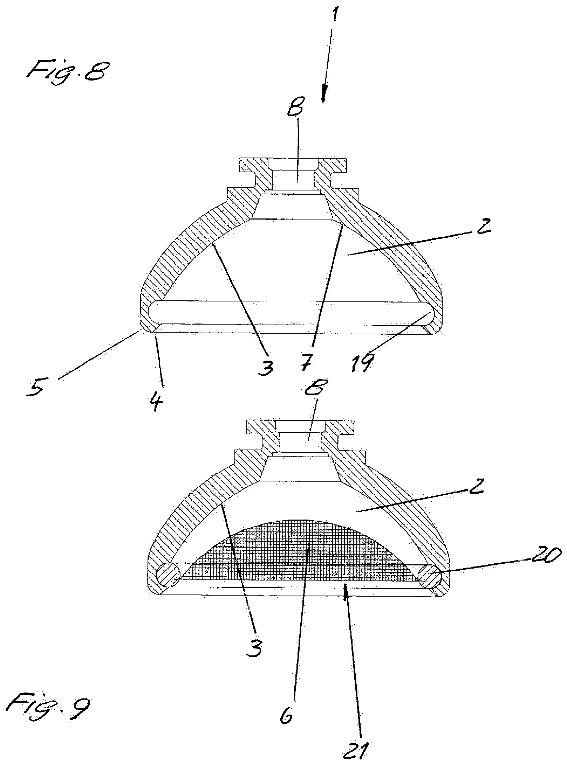

Auch Figur 8 zeigt ohne Gewebe einen Greifer 1 mit einer Greiferkammer 2, der im Bereich der Greiferöffnung 4 an der Innenwand 3 der Greiferkammer 2 eine umlaufende Rastnut 19 aufweist. Dabei weist die Greiferkammer einen kalottenförmigen Querschnitt auf.

Figur 9 zeigt den Greifer nach Figur 8, wobei in die umlaufende Rastnut 19 ein Rastwulst 20 eines Gewebeelements 21 eingerastet ist. Das in Figur 10 separat dargestellte Gewebeelement 21 weist das Gewebe 6 auf, an dessen radial umlaufendem Rand der Rastwulst 20 angeordnet ist. Das Gewebe 6 hat bereits eine dem zu verarbeitenden Teigstücken 16 angepaßte kugelkappenartige Form. Dieser Rastwulst 20 ist elastisch verformbar und weist eine radial nach außen gerichtete Vorspannung auf. Diese Vorspannung bewirkt ein festes Halten des Rastwulstes 20 des Gewebeelements 21 in der Rastnut 19. Durch starke Kraftbeaufschlagung des Gewebes 6 in die Greiferkammer 2 hinein kann der Rastwulst 20 aus der Rastnut 19 ausrasten und das Gewebeelement 21 zum Austausch gegen ein anderes Gewebeelement 21 oder zum Reinigen des Gewebes 6 entnommen werden.

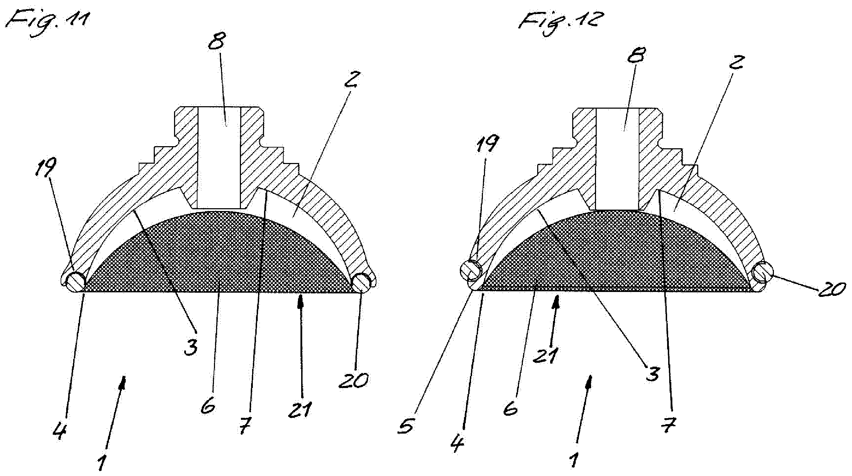

Figur 11 zeigt einen Greifer 1 mit einer Greiferkammer 2, der im Bereich der Greiferöffnung 4 an der umlaufenden Stirnseite des Greifers 1 eine umlaufende Rastnut 19 aufweist. Dabei weist die Greiferkammer 2 einen kalottenförmigen Querschnitt auf, wobei in die umlaufende Rastnut 19 ein Rastwulst 20 eines Gewebeelements 21 eingerastet ist. Das Gewebeelement 21 weist das Gewebe 6 auf, an dessen radial umlaufendem Rand der Rastwulst 20 angeordnet ist. Das Gewebe 6 hat bereits eine dem zu verarbeitenden Teigstücken 16 angepaßte kugelkappenartige Form. Dieser Rastwulst 20 ist elastisch verformbar.

Auch Figur 12 zeigt einen Greifer 1 mit einer Greiferkammer 2, der im Bereich der Greiferöffnung 4 an der umlaufenden Außenseite des Greifers 1 eine umlaufende Rastnut 19 aufweist. Dabei weist die Greiferkammer 2 einen kalottenförmigen Querschnitt auf, wobei in die umlaufende Rastnut 19 ein Rastwulst 20 eines Gewebeelements 21 eingerastet ist. Das Gewebeelement 21 weist das Gewebe 6 auf, an dessen radial umlaufendem Rand der Rastwulst 20 angeordnet ist. Das Gewebe 6 hat bereits eine dem zu verarbeitenden Teigstücken 16 angepaßte kugelkappenartige Form. Dieser Rastwulst 20 ist elastisch verformbar und weist eine radial nach innen gerichtete Vorspannung auf.

### Bezugszeichenliste

- 1: Greifer
- 2: Greiferkammer
- 3: Innenwand
- 4: Greiferöffnung
- 5: Wölbung
- 6: Gewebe
- 6': Gewebe
- 7: Boden
- 8: Luftanschluß
- 9: Ejektor
- 9`: Ejektor
- 10: Druckluftanschluß
- 11: Düse
- 12: Mischkammer
- 13: Auslaß
- 14: Sauganschluß
- 15: Strömungsrichtung
- 16: Teigstück
- 17: Unterdruckleitung
- 18: Druckluftimpulsanschluß
- 19: Rastnut
- 20: Rastwulst
- 21: Gewebeelement

## Patentansprüche

1. Greiferanordnung zum Erfassen von Teigstücken (16) oder Backwaren von einer Aufnahmeunterlage sowie Ablegen der Teigstücke (16) oder Backwaren auf einer Ablageunterlage in einem Arbeitstakt, wobei ein Greifer (1) eine Greiferkammer (2) mit einer nach unten gerichteten Greiferöffnung (4) aufweist, die von einem luftdurchlässigen Gewebe (6, 6') verschlossen ist, wobei ein Luftanschluß (8) in den Bodenbereich (7) der Greiferkammer (2) mündet, über den die Greiferkammer (2) mit einer Unterdruckquelle verbunden ist und im Arbeitstakt mit Unterdruck beaufschlagbar ist, wobei das Gewebe (6, 6') ein elastisches Gewebe ist, **dadurch gekennzeichnet, dass** das Gewebe sich nach Erfassen des Teigstücks (16) oder der Backware aufgrund des Unterdrucks teilweise in die Greiferkammer (2) hineinwölbt.

2. Greiferanordnung nach Anspruch 1, **dadurch gekennzeichnet, daß** das luftdurchlässige Gewebe (6, 6') ein Filzgewebe oder ein Gazegewebe oder ein Baumwollgewebe oder ein Leinengewebe oder ein Metallgewebe ist.

3. Greiferanordnung nach einem der vorhergehenden Ansprüche, **dadurch gekennzeichnet, daß** das Gewebe vom umlaufenden Rand der Greiferöffnung (4) aus kalottenartig in die Greiferkammer (2) hineingewölbt ist.

4. Greiferanordnung nach den vorhergehenden Ansprüchen, **dadurch gekennzeichnet, daß** das Gewebe (6) an einem Gewebeelement (21) angeordnet ist, das lösbar an der Greiferöffnung (4) befestigbar ist.

5. Greiferanordnung nach Anspruch 4, **dadurch gekennzeichnet, daß** das Gewebeelement (21) mittels einer Rastanordnung lösbar an der Greiferöffnung (4) befestigbar ist.

6. Greiferanordnung nach Anspruch 5, **dadurch gekennzeichnet, daß** das Gewebeelement (21) einen radial umlaufenden Rastwulst (20) aufweist, der in eine umlaufende Rastnut (19) im Bereich der Greiferöffnung (4) an der Innenwand (3) der Greiferkammer (2) elastisch einrastbar ist.

7. Greiferanordnung nach den vorhergehenden Ansprüchen, **dadurch gekennzeichnet, daß** die Greiferkammer (2) eine kalottenartige Innenwand (3) mit einer kreisrunden Greiferöffnung (4) aufweist.

8. Greiferanordnung nach den vorhergehenden Ansprüchen, **dadurch gekennzeichnet, daß** der umlaufende Rand der Greiferöffnung (4) der Greiferkammer (2) eine radial nach außen gerichtete Wölbung (5) aufweist.

9. Greiferanordnung nach den vorhergehenden Ansprüchen, **dadurch gekennzeichnet, daß** die Greiferkammer (2) vor Ergreifen des Teigstücks (16) mit einem Druckluftimpuls beaufschlagbar ist.

10. Greiferanordnung nach den vorhergehenden Ansprüchen, **dadurch gekennzeichnet, daß** die Greiferkammer (2) zum Ablegen der Teigstücke (16) oder Backwaren mit einem Druckluftimpuls beaufschlagbar ist.

11. Greiferanordnung nach einem der vorhergehenden Ansprüche, **dadurch gekennzeichnet, daß** die Unterdruckquelle aus ein oder mehreren Ejektoren (9, 9') gebildet ist und jeder Ejektor (9, 9') einen Druckluftanschluß (10) aufweist, der in gerader Strömungsrichtung (15) über eine Düse (11) zu einer Mischkammer (12) und von der Mischkammer (12) zu einem Auslaß (13) führt und quer zur Strömungsrichtung (15) vom Druckanschluß (10) zum Auslaß (13) ein Sauganschluß (14) in die Mischkammer (12) mündet, wobei die Sauganschlüsse (14) mit dem Luftanschluß (8) der Greiferkammer (2) verbunden sind.

12. Greiferanordnung nach einem der vorhergehenden Ansprüche, **dadurch gekennzeichnet, daß** die Luftanschlüsse (8) mehrerer Greifer (1) mit den Sauganschlüssen (14) einer oder mehrerer Unterdruckquellen verbunden sind.

13. Greiferanordnung nach einem der vorhergehenden Ansprüche, **dadurch gekennzeichnet, daß** der Greifer (1) zwischen einer Aufnahmeposition und einer davon entfernten Ablageposition im Arbeitstakt bewegbar antreibbar ist, wobei in der Aufnahmeposition ein Erfassen der Teigstücke (16) oder Backwaren von der Aufnahmeunterlage und in der Ablageposition ein Ablegen der Teigstücke (16) oder Backwaren auf die Ablageunterlage erfolgt.

14. Greiferanordnung nach einem der vorhergehenden Ansprüche, **dadurch gekennzeichnet, daß** der Greifer (1) zu einem Erfassen des Teigstücks (16) oder der Backware zur Aufnahmeunterlage absenkbar und nach einem Erfassen des Teigstücks (16) oder der Backware von der Aufnahmeunterlage im Arbeitstakt von der Aufnahmeunterlage anhebbar antreibbar ist.

15. Greiferanordnung nach den Ansprüchen 13 und 14, **dadurch gekennzeichnet, daß** der Greifer (1) zu einem Ablegen des Teigstücks (16) oder der Backware auf der Ablageunterlage im Arbeitstakt absenkbar und nach der Ablage des Teigstücks (16) oder der Backware anhebbar antreibbar ist.

## Claims

1. Gripper assembly for picking up dough pieces (16) or baked products from a receiving substrate and depositing the dough pieces (16) or baked products on a depositing substrate in one working stroke, wherein a gripper (1) has a gripper chamber (2) with a downwardly directed opening (4) which is closed by an air-permeable fabric (6, 6'), wherein an air connection (8) leads into the bottom region (7) of the gripper chamber (2), via which air connection the gripper chamber (2) is connected to a negative pressure source and can be subjected to negative pressure during the working stroke, wherein the fabric (6, 6') is an elastic fabric, **characterized in that** the fabric partially arches into the gripper chamber (2) because of the negative pressure after the dough piece (16) or the baked product is picked up.

2. Gripper assembly according to Claim 1, **characterized in that** the air-permeable fabric (6, 6') is a felt fabric or a gauze fabric or a cotton fabric or a linen fabric or a metal fabric.

3. Gripper assembly according to either of the preceding claims, **characterized in that** the fabric is arched in the manner of a dome into the gripper chamber (2) from the encircling edge of the gripper opening (4).

4. Gripper assembly according to one of the preceding claims, **characterized in that** the fabric (6) is arranged on a fabric element (21) which is fastenable releasably on the gripper opening (4).

5. Gripper assembly according to Claim 4, **characterized in that** the fabric element (21) is fastenable releasably on the gripper opening (4) by means of a latching assembly.

6. Gripper assembly according to Claim 5, **characterized in that** the fabric element (21) has a radially encircling latching bead (20) which is latchable elastically in an encircling latching groove (19) in the region of the gripper opening (4) on the inner wall (3) of the gripper chamber (2).

7. Gripper assembly according to one of the preceding claims, **characterized in that** the gripper chamber (2) has a dome-like inner wall (3) with a circular gripper opening (4).

8. Gripper assembly according to one of the preceding claims, **characterized in that** the encircling edge of the gripper opening (4) of the gripper chamber (2) has a radially outwardly directed arch (5).

9. Gripper assembly according to one of the preceding claims, **characterized in that** the gripper chamber (2) can be subjected to a pulse of compressed air before grasping the dough piece (16).

10. Gripper assembly according to one of the preceding claims, **characterized in that** the gripper chamber (2) can be subjected to a pulse of compressed air for depositing the dough pieces (16) or baked products.

11. Gripper assembly according to one of the preceding claims, **characterized in that** the negative pressure source is formed from one or more ejectors (9, 9') and each ejector (9, 9') has a compressed air connection (10) which leads in a rectilinear flow direction (15) via a nozzle (11) to a mixing chamber (12) and from the mixing chamber (12) to an outlet (13) and, transversely with respect to the flow direction (15) from the pressure connection (10) to the outlet (13), a suction connection (14) leads into the mixing chamber (12), wherein the suction connections (14) are connected to the air connection (8) of the gripper chamber (2).

12. Gripper assembly according to one of the preceding claims, **characterized in that** the air connections (8) of a plurality of grippers (1) are connected to the suction connections (14) of one or more negative pressure sources.

13. Gripper assembly according to one of the preceding claims, **characterized in that** the gripper (1) is driveable so as to be movable in the working stroke between a receiving position and a depositing position, which is remote therefrom, wherein, in the receiving position, the dough pieces (16) or baked products are picked up from the receiving substrate and, in the depositing position, the dough pieces (16) or baked products are deposited on the depositing substrate.

14. Gripper assembly according to one of the preceding claims, **characterized in that** the gripper (1) is driveable such that it can be lowered to the receiving substrate in order to pick up the dough piece (16) or the baked product and, after picking up the dough piece (16) or the baked product from the receiving substrate, so as to be liftable from the receiving substrate in the working stroke.

15. Gripper assembly according to Claims 13 and 14, **characterized in that** the gripper (1) is driveable so as to be lowerable in the working stroke for depositing the dough piece (16) or the baked product on the depositing substrate and so as to be liftable after the dough piece (16) or the baked product has been deposited.

## Revendications

1. Agencement de préhension pour la saisie de morceaux de pâte (16) ou de produits de boulangerie d'un support de réception ainsi que pour le dépôt des morceaux de pâte (16) ou des produits de boulangerie sur un support de dépôt dans un cycle de travail, un préhenseur (1) présentant une chambre de préhension (2) avec une ouverture de préhension (4) dirigée vers le bas, qui est fermée par un tissu (6, 6') perméable à l'air, un raccord d'air (8) débouchant dans la zone de fond (7) de la chambre de préhension (2), par l'intermédiaire duquel la chambre de préhension (2) est reliée à une source de dépression et peut être soumise à une dépression pendant le cycle de travail, le tissu (6, 6') étant un tissu élastique, **caractérisé en ce que** le tissu se cambre partiellement dans la chambre de préhension (2) en raison de la dépression après avoir saisi le morceau de pâte (16) ou le produit de boulangerie.

2. Agencement de préhension selon la revendication 1, **caractérisé en ce que** le tissu perméable à l'air (6, 6') est un tissu de feutre ou un tissu de gaze ou un tissu de coton ou un tissu de lin ou un tissu métallique.

3. Agencement de préhension selon l'une quelconque des revendications précédentes, **caractérisé en ce que** le tissu est cambré en forme de calotte dans la chambre de préhension (2) à partir du bord périphérique de l'ouverture de préhension (4).

4. Agencement de préhension selon les revendications précédentes, **caractérisé en ce que** le tissu (6) est agencé sur un élément à tissu (21) qui peut être fixé de manière amovible à l'ouverture de préhension (4).

5. Agencement de préhension selon la revendication 4, **caractérisé en ce que** l'élément à tissu (21) peut être fixé de manière amovible à l'ouverture de préhension (4) au moyen d'un agencement d'encliquetage.

6. Agencement de préhension selon la revendication 5, **caractérisé en ce que** l'élément à tissu (21) présente un bourrelet d'encliquetage périphérique radial (20) qui peut être encliqueté élastiquement dans une rainure d'encliquetage périphérique (19) dans la zone de l'ouverture de préhension (4) sur la paroi intérieure (3) de la chambre de préhension (2).

7. Agencement de préhension selon les revendications précédentes, **caractérisé en ce que** la chambre de préhension (2) présente une paroi intérieure (3) en forme de calotte avec une ouverture de préhension (4) circulaire.

8. Agencement de préhension selon les revendications précédentes, **caractérisé en ce que** le bord périphérique de l'ouverture de préhension (4) de la chambre de préhension (2) présente une cambrure (5) dirigée radialement vers l'extérieur.

9. Agencement de préhension selon les revendications précédentes, **caractérisé en ce que** la chambre de préhension (2) peut être soumise à une impulsion d'air comprimé avant la prise du morceau de pâte (16).

10. Agencement de préhension selon les revendications précédentes, **caractérisé en ce que** la chambre de préhension (2) peut être soumise à une impulsion d'air comprimé pour le dépôt des morceaux de pâte (16) ou des produits de boulangerie.

11. Agencement de préhension selon l'une quelconque des revendications précédentes, **caractérisé en ce que** la source de dépression est formée d'un ou de plusieurs éjecteurs (9, 9') et chaque éjecteur (9, 9') présente un raccord d'air comprimé (10), qui, dans une direction d'écoulement rectiligne (15), conduit par l'intermédiaire d'une buse (11) à une chambre de mélange (12) et de la chambre de mélange (12) à une sortie (13) et, transversalement à la direction d'écoulement (15) du raccord de pression (10) à la sortie (13), un raccord d'aspiration (14) débouche dans la chambre de mélange (12), les raccords d'aspiration (14) étant reliés au raccord d'air (8) de la chambre de préhension (2).

12. Agencement de préhension selon l'une quelconque des revendications précédentes, **caractérisé en ce que** les raccords d'air (8) de plusieurs préhenseurs (1) sont reliés aux raccords d'aspiration (14) d'une ou de plusieurs sources de dépression.

13. Agencement de préhension selon l'une quelconque des revendications précédentes, **caractérisé en ce que**, pendant le cycle de travail, le préhenseur (1) peut être entraîné de manière à être déplacé entre une position de réception et une position de dépôt éloignée de celle-ci, une saisie des morceaux de pâte (16) ou des produits de boulangerie du support de réception ayant lieu dans la position de réception et un dépôt des morceaux de pâte (16) ou des produits de boulangerie sur le support de dépôt ayant lieu dans la position de dépôt.

14. Agencement de préhension selon l'une quelconque des revendications précédentes, **caractérisé en ce que** le préhenseur (1) peut être entraîné de manière à être abaissé vers le support de réception pour une saisie du morceau de pâte (16) ou du produit de boulangerie et peut être entraîné de manière à être soulevé du support de réception après une saisie du morceau de pâte (16) ou du produit de boulangerie du support de réception pendant le cycle de travail.

15. Agencement de préhension selon les revendications 13 et 14, **caractérisé en ce que** le préhenseur (1) peut être entraîné de manière à être abaissé pour un dépôt du morceau de pâte (16) ou du produit de boulangerie sur le support de dépôt pendant le cycle de travail et peut être entraîné pour être soulevé après le dépôt du morceau de pâte (16) ou du produit de boulangerie.
